# EUROPÄISCHE PATENTANMELDUNG

(11) **EP 0 545 243 A2**
(43) Veröffentlichungstag der Anmeldung: **09.06.1993**
(21) Anmeldenummer: 92120050.7
(22) Anmeldetag: 25.11.1992
(51) Int. Cl.: B62D 5/32

(54) **Hydraulikkreis für ein Fahrzeug**

(30) Priorität: 02.12.1991 US 801299
(71) Anmelder: DEERE & COMPANY, Moline, Illinois 61265 (US)
(72) Erfinder: Barber, Dennis Ray, Chanhassen, Minnesota 55317 (US); Sparks, Gregory Evan, Waterloo, Iowa 50702 (US)
(74) Vertreter: Feldmann, Bernhard

(57) **Zusammenfassung**

Es wird ein Hydraulikkreis für ein Fahrzeug beschrieben, der eine durch die Antriebsmaschine (10) des Fahrzeuges angetriebene Haupthydraulikpumpe (12) aufweist, die der Druckversorgung wenigstens eines hydraulischen Abnehmers (20, 24, 26), wie beispielsweise eines hydraulischen Lenk- oder Bremskreises, dient. Durch die Fahrzeugräder wird ständig eine Hilfshydraulikpumpe angetrieben. Steuermittel sorgen dafür, daß bei einem Ausfall der durch die Haupthydraulikpumpe (12) erfolgenden Druckversorgung des hydraulischen Abnehmers (20, 24, 26) automatisch eine Druckversorgung durch die Hilfshydraulikpumpe erfolgt. Als Hilfshydraulikpumpe dient eine Hilfspumpe (30) mit veränderbarer Fördermenge, die an den Druckbedarf angepaßt werden kann. Zu diesem Zweck sind Steuermittel vorgesehen, die die Hilfspumpe (30) in Bereitschaftsstellung, bei der keine Hydraulikflüssigkeit gefördert wird, bringen, sofern eine Druckversorgung durch die von der Antriebsmaschine (10) angetriebene Haupthydraulikpumpe (12) erfolgt. Bei Ausfall der Haupthydraulikpumpe (12) wird die Hilfspumpe (30) automatisch in Arbeitsstellung gebracht, in der sie die erforderliche Hydraulikflüssigkeit an die hydraulischen Abnehmer (20, 24, 26) abgibt. Hierbei kann sichergestellt werden, daß die Hilfspumpe (30) mit voller Leistung pumpt, wenn die Haupthydraulikpumpe (12) nicht arbeitet.

## Beschreibung

Die Erfindung betrifft einen Hydraulikkreis für ein Fahrzeug mit einer durch die Antriebsmaschine des Fahrzeuges angetriebenen Haupthydraulikpumpe, die der Druckversorgung wenigstens eines hydraulischen Abnehmers, wie beispielsweise eines hydraulischen Lenk- oder Bremskreises, dient. Durch die Fahrzeugräder wird ständig eine Hilfshydraulikpumpe angetrieben. Steuermittel sorgen dafür, daß bei einem Ausfall der durch die Haupthydraulikpumpe erfolgenden Druckversorgung des hydraulischen Abnehmers automatisch eine Druckversorgung durch die Hilfshydraulikpumpe erfolgt.

Viele Fahrzeuge, wie beispielsweise industrielle und landwirtschaftliche Fahrzeuge, haben hydraulische Brems- und/oder Lenkkreise, die durch eine von der Antriebsmaschine angetriebene Hydraulikpumpe versorgt werden. Einige dieser Fahrzeuge sind so schwer, daß sie sich nicht unmittelbar durch die Bedienungsperson lenken oder bremsen lassen, was jedoch aus Sicherheitsgründen für den Fall eines Ausfalls der Antriebsmaschine gefordert wird. Für diesen Fall wurde vorgeschlagen, hydraulische Hilfsdruckquellen an den Hydraulikkreis anzuschließen, die bei Ausfall der Antriebsmaschine den hydraulischen Brems- und/oder Lenkkreis mit unter Druck stehender Hydraulikflüssigkeit versorgen.

Das Erfordernis einer Hilfsdruckquelle wurde bisher durch unterschiedliche Maßnahmen erfüllt. Beispielsweise wird durch die US-A-4,326,558 und die US-A-4,303,089 die Verwendung von Druckspeichern vorgeschlagen. Aus der US-A-3,820,620 und der US-A-3,995,711 ist die Verwendung elektrisch angetriebener hydraulischer Hilfspumpen bekannt. Gemäß der US-A-4,160,490, der US-A-4,076,096 und der US-A-4,015,681 wird eine hydraulische Hilfspumpe verwendet, die durch ein auf dem Boden abrollendes Rad des Fahrzeugs angetrieben wird. Bei den vom Boden her angetriebenen Hilfspumpen handelt es sich um Konstantpumpen, deren Fördermenge in einem festen Verhältnis zu der Eingangsdrehzahl steht. Der Hydraulikflüssigkeitsstrom wird durch mehrere Strömungsregulierventile gesteuert, um einen Pumpenbetrieb in beiden Fahrtrichtungen zu ermöglichen. Ferner soll durch ein Entlastungsventil die Wärmeerzeugung vermindert werden, sofern die durch die Antriebsmaschine angetriebene Hydraulikpumpe den erforderlichen Hydraulikdruck aufbaut.

Durch die US-A-4,160, 490 ist ein Hydraulikkreis der eingangs genannten Art bekannt, bei dem eine durch die Fahrzeugantriebsmaschine angetriebene Haupthydraulikpumpe Hydraulikflüssigkeit aus einem Vorratsbehälter absaugt und unter Druck an ein hydraulisch betätigbares Lenkventil abgibt. Am Getriebeausgang, der unmittelbar die Antriebsräder des Fahrzeugs antreibt, ist eine in ihrer Drehrichtung umkehrbare hydraulische Hilfspumpe angeschlossen, die ebenfalls Hydraulikflüssigkeit aus dem Vorratsbehälter ansaugt. Der Hilfspumpe ist ein zwischen zwei Lagen umschaltbares Ventil nachgeschaltet, welches den Hilfspumpenausgang in der ersten Lage mit dem Vorratsbehälter und in der zweiten Lage mit dem Lenkventil verbindet. Das Ventil wird durch den Ausgangsdruck der Haupthydraulikpumpe in seine erste Lage und durch eine Feder in seine zweite Lage gedrängt. Durch die ständige Förderung von Hydraulikflüssigkeit durch die Hilfspumpe treten zusätzliche Leistungsverluste auch dann auf, wenn die Haupthydraulikpumpe fehlerfrei arbeitet.

Auch wenn die Hydrauliksysteme, die eine vom Boden her angetriebene Hilfspumpe aufweisen, hinsichtlich Leistungsfähigkeit und Zuverlässigkeit den Hydrauliksystemen, die als Hilfsdruckquelle Druckspeicher oder elektrisch angetriebe Pumpen verwenden, als überlegen angesehen werden, wurden bisher meist die letztgenannten Hydrauliksysteme wegen ihrer geringeren Kosten, geringeren Komplexität und geringeren Leistungsverluste bevorzugt.

Die der Erfindung zugrunde liegende Aufgabe wird darin gesehen, einen Hydraulikkreis mit einer vom Boden her angetriebenen Hilfshydraulikpumpe der eingangs genannten Art anzugeben, der einen einfachen Aufbau aufweist und vergleichsweise leistungsfähig und kostengünstig herstellbar ist.

Die Aufgabe wird erfindungsgemäß, ausgehend von dem Oberbegriff des Patentanspruchs 1, durch dessen kennzeichnende Merkmale gelöst. Weitere vorteilhafte Ausgestaltungen und Weiterbildungen der Erfindung gehen aus den Unteransprüchen hervor.

Als Hilfshydraulikpumpe dient eine Hilfspumpe mit veränderbarer Fördermenge, die an den Druckbedarf angepaßt werden kann. Zu diesem Zweck sind Steuermittel vorgesehen, die die Hilfspumpe in Bereitschaftsstellung, bei der keine Hydraulikflüssigkeit gefördert wird, bringen, sofern eine Druckversorgung durch die von der Antriebsmaschine angetriebene Hydraulikpumpe erfolgt. Bei Ausfall der Hydraulikpumpe wird die Hilfspumpe automatisch in Arbeitsstellung gebracht, in der sie die erforderliche Hydraulikflüssigkeit an die hydraulischen Abnehmer abgibt. Hierbei kann sichergestellt werden, daß die Hilfspumpe mit voller Leistung pumpt, wenn die Haupthydraulikpumpe nicht arbeitet.

Die erfindungsgemäße Lösung weist einen einfachen Aufbau auf und ist kostengünstig herstellbar. Im wesentlichen ist lediglich eine Hilfspumpe mit wenigen Ventilmitteln, die in das Pumpengehäuse integriert sein können, erforderlich. Im Falle, daß die Haupthydraulikpumpe einwandfrei arbeitet, wird ein ständiger Hydraulikflüssigkeitsrückfluß von der Hilfspumpe zum Vorratsbehälter vermieden, da die Hilfspumpe in diesem Fall keine Hydraulikflüssigkeit fördert. Damit können Leistungsverluste durch den erfindungsgemäßen Hydraulikkreis weitgehend vermieden werden.

Vorzugsweise weist die Hilfspumpe ein Gehäuse mit wenigstens einer Bohrung auf, in der ein Kolben verschiebbar angeordnet ist. Der Kolben unterteilt die Bohrung in eine Pilotkammer, die über eine Pilotleitung mit dem Ausgang der Haupthydraulikpumpe in Verbindung steht, und eine Pumpenkammer. Der Kolben wird bei einem Druckanstieg in der Pilotkammer in seine Bereitschaftsstellung und durch Federmittel gegen den Druck in der Pilotkammer in seine Arbeitsstellung gedrückt. Wenigstens ein Antriebsrad oder mit einem Antriebsrad ständig in Eingriff stehende Getriebeteile sind mit einem drehbaren Kurvenbauteil verbunden, so daß dieses sich bei fahrendem Fahrzeug ständig mitdreht. An dem Kurvenbauteil greift in Arbeitsstellung der Hilfspumpe dessen Kolben an und wird bei Drehung des Kurvenbauteils in der Bohrung hin- und her geschoben.

Zweckmäßigerweise steht die Pumpenkammer der Hilfspumpe über eine Ausgangsleitung mit dem hydraulischen Abnehmer und/oder dem Ausgang der Haupthydraulikpumpe sowie über eine Eingangsleitung mit einem Vorratsbehälter und/oder dem Eingang der Haupthydraulikpumpe in Verbindung. Um einen Flüssigkeitsrückstrom zu vermeiden, ist in der Ausgangsleitung ein Rückschlagventil angeordnet, das nur einen Hydraulikflüssigkeitsabfluß von der Pumpenkammer erlaubt, und in der Eingangsleitung ist ein Rückschlagventil angeordnet, das nur einen Hydraulikflüssigkeitszufluß zu der Pumpenkammer erlaubt.

Eine bevorzugte Weiterbildung der Erfindung schlägt vor, Überdruckventilmittel vorzusehen, durch die die Fördermenge der Hilfspumpe reduziert wird, wenn der Ausgangsdruck der Hilfspumpe einen vorgebbaren Druck übersteigt. Vorzugsweise ist als Überdruckventilmittel ein Überdruckventil vorgesehen, welches einen mit dem Druckraum der Hilfspumpe in Verbindung stehenden Eintrittsanschluß, einen mit der Pilotkammer in Verbindung stehenden Austrittsanschluß und wenigstens ein Ventilteil aufweist, welches bei Überschreiten eines vorgebbaren Pumpendruckes der Hilfspumpe eine erste Lage einnimmt, in der der Eintrittsanschluß mit dem Austrittsanschluß verbunden ist, und welches bei Unterschreiten eines vorgebbaren Pumpendruckes der Hilfspumpe eine zweite Lage einnimmt, in der der Eintrittsanschluß von dem Austrittsanschluß getrennt wird. An dem Ventilteil greifen Federmittel an, die das Ventilteil gegen den im Eintrittsanschluß herrschenden Druck in seine zweite Lage drängen.

Gemäß einer weiteren bevorzugten Ausgestaltung der Erfindung ist ein Wechselabsperrventil vorgesehen, dessen Eintrittsöffnung mit dem Ausgang der Haupthydraulikpumpe, dessen Ausflußöffnung mit einem Vorratsbehälter und dessen mittlere Pilotöffnung mit der Pilotkammer in Verbindung stehen. Ferner ist wenigstens ein Absperrmittel vorgesehen, das in einer ersten Lage die Verbindung zwischen der Eintrittsöffnung und der Pilotöffnung öffnet und die Verbindung zwischen der Pilotöffnung und der Ausflußöffnung verschließt und in einer zweiten Lage die Verbindung zwischen der Eintrittsöffnung und der Pilotöffnung verschließt und die Verbindung zwischen der Pilotöffnung und der Ausflußöffnung öffnet. Das Absperrmittel wird in Abhängigkeit des Ausgangsdruckes der Haupthydraulikpumpe in seine erste Lage und durch Federmittel gegen den Druck in der Pilotkammer in seine zweite Lage gedrängt. Das Absperrmittel nimmt seine erste Lage ein, wenn die Haupthydraulikpumpe in Betrieb ist und wird durch die Federmittel in ihre zweite Lage gedrängt, wenn die Haupthydraulikpumpe ausfällt und ihr Ausgangsdruck abfällt.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine erste Ausgestaltung der vorliegenden Erfindung, die teilweise im Querschnitt und teilweise als schematisches Diagramm dargestellt ist,
- Fig. 2: den Querschnitt durch das Verstellpumpengehäuse der in Fig. 1 dargestellten ersten Ausgestaltung,
- Fig. 3: eine zweite Ausgestaltung der vorliegenden Erfindung, die teilweise im Querschnitt und teilweise als schematisches Diagramm dargestellt ist,
- Fig. 4: den Querschnitt durch das Verstellpumpengehäuse der in Fig. 3 dargestellten zweiten Ausgestaltung und
- Fig. 5: den Querschnitt längs der in Fig. 4 eingezeichneten Linie 5 - 5.

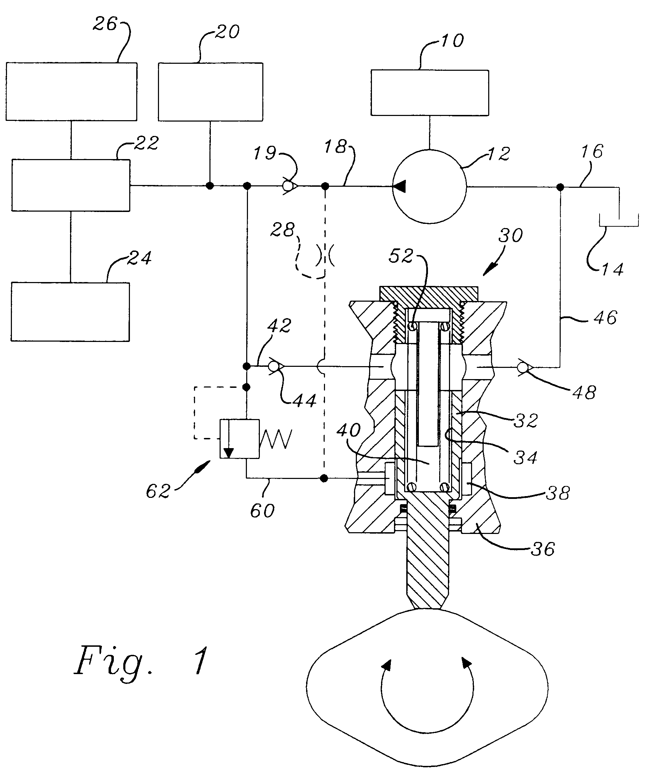

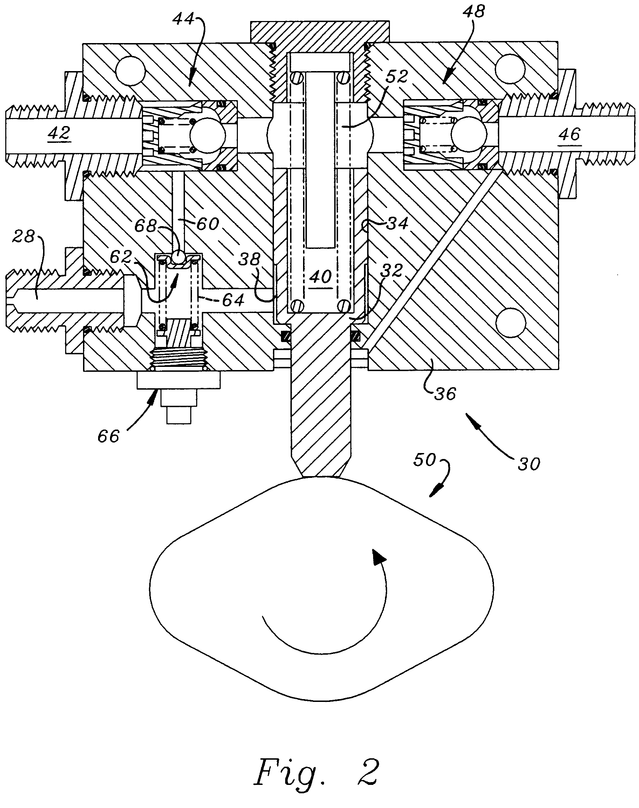

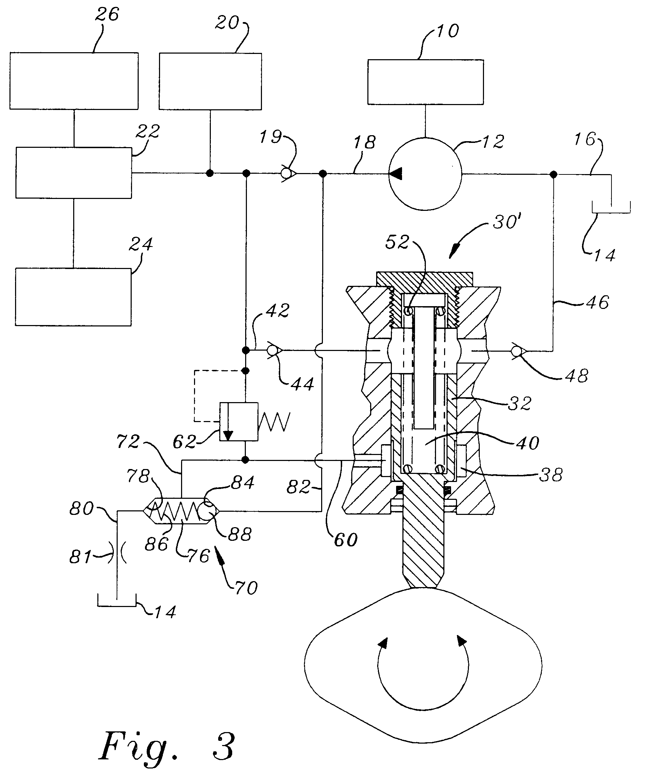

Die Figuren 1 und 2 beziehen sich auf eine erste Ausgestaltung der Erfindung, während die Figuren 3, 4 und 5 eine zweite Ausgestaltung der Erfindung zeigen. In den Figuren wurden gleich oder sich entsprechende Einzelheiten mit den selben Bezugsziffern belegt.

Aus Fig. 1 geht die Antriebsmaschine 10 eines nicht näher dargestellten Fahrzeuges hervor, die eine Haupthydraulikpumpe 12 antreibt. Die Haupthydraulikpumpe 12 saugt über eine Eintrittsleitung 16 Hydraulikflüssigkeit aus einem Vorratsbehälter 14 an und versorgt über die Ausgangsleitung 18 und das Rückschlagventil 19 einerseits den hydraulischen Bremskreis 20 des Fahrzeugs und andererseits unter Zwischenschaltung eines Prioritätsventils 22 einen hydraulischen Lenkkreis 24 sowie einen Kühl- und Schmierkreis 26 des Fahrzeugs mit unter Druck stehender Hydraulikflüssigkeit. Das Rückschlagventil 19 erlaubt einen Hydraulikflüssigkeitsdurchfluß von der durch die Antriebsmaschine 10 angetriebenen Haupthydraulikpumpe 12 zu dem Bremskreis 20 und dem Prioritätsventil 22. Es verhindert jedoch einen Rückfluß, wenn der Pumpendruck unter einen vorherbestimmbaren Wert abfällt. Bei dem Prioritätsventil 19 und den Hydraulikkreisen 20, 24 und 26 handelt es sich um übliche Anordnungen, die hier nicht näher beschrieben werden.

Eine Hilfsquelle für unter Druck stehende Hydraulikflüssigkeit enthält eine durch die Fahrzeugräder angetriebene Verstellpumpe 30 und einen Steuerkreis, durch den der Hub der Verstellpumpe 30 zurückgestellt wird, sofern die durch die Antriebsmaschine 10 angetriebene Haupthydraulikpumpe 12 einsatzbereit ist. Die Verstellpumpe 30 enthält einen Kolben 32, der in einer Bohrung 34 des Gehäuses 36 verschiebbar angeordnet ist und die Bohrung 34 in eine Pilotkammer 38 und eine Pumpenkammer 40 unterteilt. Eine Hilfsausgangsleitung 42 mit einem Rückschlagventil 44 läßt einen einseitigen Durchfluß der Hydraulikflüssigkeit von der Pumpenkammer 40 zu der Ausgangsleitung 18 der Haupthydraulikpumpe 12 zu. Eine Hilfseingangsleitung 46 mit einem Rückschlagventil 48 läßt einen einseitigen Durchfluß der Hydraulikflüssigkeit von der Eintrittsleitung 16 der Haupthydraulikpumpe 12 zu der Pumpenkammer 40 zu. Über eine Pilotleitung 28 liegt der Flüssigkeitsdruck der Ausgangsleitung 18 der Haupthydraulikpumpe 12 an der Pilotkammer 38 an.

Eine reversible, durch die Fahrzeugräder antreibbare Nockenscheibe 50 steht mit dem Kolben 32 derart in Eingriff, daß bei Drehung der Nockenscheibe 50 der Kolben 32 sich hin und her bewegt. Eine Feder 52 ist innerhalb der Pumpenkammer 40 angeordnet und drückt den Kolben 32 in Richtung einer Vollhubposition. Wenn die Haupthydraulikpumpe 12 betriebsbereit ist, drückt der Druck in der Pilotleitung 28 den Kolben 32 von der Nockenscheibe 50 weg, so daß die Verstellpumpe 30 keinen Pumpenhub ausführt. Bleibt die Haupthydraulikpumpe 12 oder die Antriebsmaschine 10 stehen, fällt der Druck in der Pilotleitung 28 ab und ermöglicht dem Kolben 32 durch die Kraft der Feder 52 sich gegen die Nockenscheibe 50 zu bewegen, so daß die Verstellpumpe ihre Hubarbeit aufnimmt. Vorzugsweise verbindet zusätzlich eine Entlastungsleitung 60 die Hilfsausgangsleitung 42 mit der Pilotleitung 28. In der Entlastungsleitung 60 kann ein Überdruckventil 62 angeordnet sein, das den Hub der Verstellpumpe 30 vermindert, wenn der Ausgangsdruck der Verstellpumpe 30 den Druck erreicht, der für die Brems- und Lenkfunktionen erforderlich ist. Normalerweise drücken eine Feder 64 sowie Spannkrafteinstellmittel 66 eine Kugel 68 des Überdruckventils 62 in eine Lage, in der die Kugel 68 die Verbindung zwischen Hilfsausgangsleitung 42 und Pilotkammer 38 verschließt.

Wenn genügend Hydraulikdruck in der Ausgangsleitung 18 herrscht, was normalerweise bei sich drehender Antriebsmaschine 10 der Fall ist, wird die Feder 52 zusammengedrückt und der Kolben 32 gemäß Fig. 1 nach oben bewegt. In dieser Lage wird der Kolben 32 durch Drehung der Nockenscheibe 50 nicht hin- und her bewegt, bzw. sein Hub wird bei drehender Nockenscheibe 50 reduziert.

Kommt die Antriebsmaschine 10 zum Stillstand, bleibt auch die Haupthydraulikpumpe 12 stehen und setzt nicht mehr die Ausgangsleitung 18 unter Druck. Der hierdurch erfolgende Druckabfall in der Ausgangsleitung 18 wird über die Pilotleitung 28 auf die Pilotkammer 38 übertragen. Fällt der Druck in der Pilotkammer 38 unter einen bestimmten Wert, beispielsweise unter ca. 1 MPa (150 psi), wird der Kolben 32 durch die Kraft der Feder 52 nach unten gedrückt, so daß er sich an die Nockenscheibe 50 anlegt. In dieser Lage vergrößert sich der Hub und das durch den Kolben 32 geförderte Hydraulikflüssigkeitsvolumen mit zunehmender Drehzahl der durch die Fahrzeugräder angetriebenen Nockenscheibe 50.

Damit werden bei sich in Vorwärts- oder Rückwärtsrichtung bewegendem Fahrzeug der Bremskreis 20 und der Lenkkreis 24 durch die als Hilfspumpe dienende Verstellpumpe mit Hydraulikflüssigkeitsdruck versorgt, so daß die Fahrzeugbremsen und die Lenkung genauso betätigt werden können, wie es gewöhnlich bei einer Versorgung mit Hydraulikflüssigkeit durch die als Hauptpumpe dienende und durch die Antriebsmaschine 10 angetriebene Haupthydraulikpumpe 12 der Fall gewesen wäre.

Bei der in den Figuren 3, 4 und 5 dargestellten alternativen Ausgestaltung der Erfindung weist ein Wechselabsperrventil 70 drei Öffnungen auf. Die erste Öffnung, die Wechselventileingangsöffnung, steht mit dem Ausgang der von der Antriebsmaschine 10 angetriebenen Haupthydraulikpumpe 12 in Verbindung. Die zweite Öffnung, die Abflußöffnung, steht mit dem Vorratsbehälter 14 in Verbindung, und die dritte Öffnung, die Wechselventilpilotöffnung, steht über den Durchgang 72, die Bohrung des Überdruckventils 62 und die Entlastungsleitung 60 mit der Pilotkammer 38 in Verbindung.

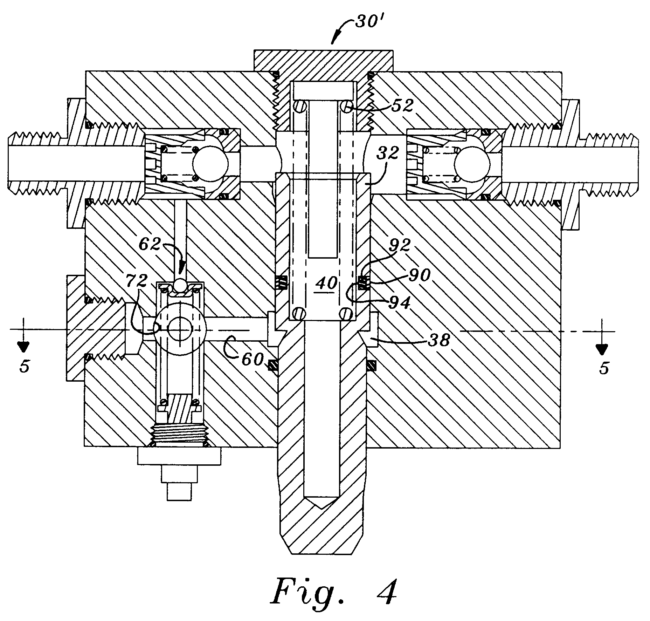

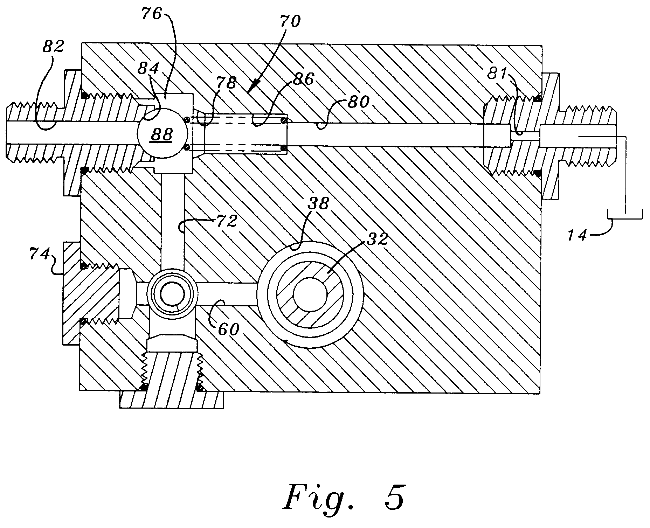

Der sich gemäß Fig. 4 und 5 von dem Überdruckventil 62 nach links erstreckende Durchgang ist durch einen Stopfen 74 verschlossen. Der Durchgang 72 verbindet die Entlastungsleitung 60 mit einer Kammer 76 des Wechselabsperrventils 70. Diese Kammer 76 steht mit dem Vorratsbehälter 14 über den Ventilsitz 78 und die Abflußleitung 80 sowie mit dem Ausgang der Haupthydraulikpumpe 12 über den Ventilsitz 84 und die Leitung 82 in Verbindung. Eine Feder 86 drückt gewöhnlich die Kugel 88 des Wechselabsperrventils 70 dichtend gegen den Ventilsitz 84. Wenn der Ausgangsdruck der Haupthydraulikpumpe 12 hoch ist, was gewöhnlich der Fall ist, bewegt sich die Kugel 88 des Wechselabsperrventils 70 gegen die Kraft der Feder 86 und dichtet den Ventilsitz 78 ab, so daß das Wechselabsperrventil 70 die Abflußleitung 80 verschließt. Hierdurch werden Leistungsverluste durch über die Abflußleitung 80 und die Blende 81 abfließende Hydraulikflüssigkeit vermieden. Wenn der Druck von der Haupthydraulikpumpe 12 nachläßt, bewegt die Feder 86 die Kugel 88 von dem Ventilsitz 78 weg und stellt über die Entlastungsleitung 62, den Durchgang 72 und die Abflußleitung 80 eine Verbindung zwischen der Pilotkammer 38 und dem Vorratsbehälter 14 her. Hierbei wird der Kolben 32 in Bedingungen versetzt, in denen er volle Hübe ausführt.

Wie ferner aus Fig. 4 hervorgeht, sind eine Kappendichtung 90, vorzugsweise aus einem Material mit geringer Reibung, und eine O-Ringdichtung 92 in eine auf dem Umfang des Kolbens 32 eingelassene ringförmigen Nut 94 eingefügt. Die Kappendichtung 90 und die O-Ringdichtung 92 verhindern ein Auswandern des Kolbens 32 und halten diesen in seiner eingezogenen Lage, in der er nicht die Nockenscheibe 50 berührt, sofern die Haupthydraulikpumpe 12 betriebsbereit ist und der Druck in der Pilotkammer 38 hoch ist.

## Patentansprüche

1. Hydraulikkreis für ein Fahrzeug mit einer durch die Antriebsmaschine (10) des Fahrzeuges angetriebenen Haupthydraulikpumpe (12), die der Druckversorgung wenigstens eines hydraulischen Abnehmers (20, 24, 26) dient, mit einer durch die Fahrzeugräder angetriebenen Hilfshydraulikpumpe und mit Steuermitteln, die bei einem Ausfall der Druckversorgung durch die Haupthydraulikpumpe (12) eine Druckversorgung durch die Hilfshydraulikpumpe sicherstellen, dadurch gekennzeichnet, daß die Hilfshydraulikpumpe eine Hilfspumpe (32) mit veränderbarer Fördermenge ist, und daß Mittel zur Beeinflussung der Fördermenge der Hilfspumpe (30) vorgesehen sind, die die Hilfspumpe (32) in Bereitschaftsstellung, bei der keine Hydraulikflüssigkeit gefördert wird, bringen, sofern eine Druckversorgung durch die von der Antriebsmaschine (10) angetriebenen Haupthydraulikpumpe (12) erfolgt.

2. Hydraulikkreis nach Anspruch 1, dadurch gekennzeichnet, daß die Hilfspumpe (30) ein Gehäuse (36) mit wenigstens einer Bohrung (34) aufweist, in der ein Kolben (32) verschiebbar angeordnet ist, der an der Bohrungswandung anliegt und die Bohrung (34) in eine Pilotkammer (38), die über eine Pilotleitung (28) mit dem Ausgang der Haupthydraulikpumpe (12) in Verbindung steht, und eine Pumpenkammer (40) unterteilt, daß der Kolben (32) durch einen Druckanstieg in der Pilotkammer (38) in seine Bereitschaftsstellung und durch Federmittel (52) in seine Arbeitsstellung gedrückt wird, daß wenigstens ein durch die Antriebsräder drehbares Kurvenbauteil (50) vorgesehen ist, an dem der in Arbeitsstellung befindliche Kolben (32) angreift und bei Drehung des Kurvenbauteils (50) in der Bohrung (34) hin- und her geschoben wird.

3. Hydraulikkreis nach Anspruch 2, dadurch gekennzeichnet, daß die Pumpenkammer (40) der Hilfspumpe (30) durch eine Ausgangsleitung (42) mit dem hydraulischen Abnehmer (20, 24, 26) und/oder dem Ausgang der Haupthydraulikpumpe (12) in Verbindung steht.

4. Hydraulikkreis nach Anspruch 3, dadurch gekennzeichnet, daß in der Ausgangsleitung (42) ein Rückschlagventil (44) angeordnet ist, das nur einen Hydraulikflüssigkeitsabfluß von der Pumpenkammer (40) erlaubt.

5. Hydraulikkreis nach einem der Ansprüche 2 bis 4, dadurch gekennzeichnet, daß die Pumpenkammer (40) der Hilfspumpe (30) durch eine Eingangsleitung (46) mit einem Vorratsbehälter (14) und/oder dem Eingang der Haupthydraulikpumpe (12) in Verbindung steht.

6. Hydraulikkreis nach Anspruch 5, dadurch gekennzeichnet, daß in der Eingangsleitung (46) ein Rückschlagventil (48) angeordnet ist, das nur einen Hydraulikflüssigkeitszufluß zu der Pumpenkammer (40) erlaubt.

7. Hydraulikkreis nach einem der Ansprüche 1 bis 6, dadurch gekennzeichnet, daß Überdruckventilmittel (62) vorgesehen sind, durch die die Fördermenge der Hilfspumpe (30) reduziert wird, wenn der Ausgangsdruck der Hilfspumpe (30) einen vorgebbaren Druck übersteigt.

8. Hydraulikkreis nach Anspruch 7, dadurch gekennzeichnet, daß als Überdruckventilmittel ein Überdruckventil (62) vorgesehen ist, welches einen mit dem Druckraum (40) der Hilfspumpe (30) in Verbindung stehenden Eintrittsanschluß, einen mit der Pilotkammer (38) in Verbindung stehenden Austrittsanschluß und wenigstens ein Ventilteil (68) aufweist, welches bei Überschreiten eines vorgebbaren Pumpendruckes der Hilfspumpe (32) eine erste Lage einnimmt, in der der Eintrittsanschluß mit dem Austrittsanschluß verbunden ist, und welches bei Unterschreiten des vorgebbaren Pumpendruckes der Hilfspumpe (32) eine zweite Lage einnimmt, in der der Eintrittsanschluß von dem Austrittsanschluß getrennt wird, und daß an dem Ventilteil (68) angreifende Federmittel (64) vorgesehen sind, die das Ventilteil (68) gegen den im Eintrittsanschluß herrschenden Druck in seine zweite Lage drängen.

9. Hydraulikkreis nach einem der Ansprüche 2 bis 8, dadurch gekennzeichnet, daß ein Wechselabsperrventil (70) vorgesehen ist, dessen Eintrittsöffnung mit dem Ausgang der Haupthydraulikpumpe (12), dessen Ausflußöffnung mit einem Vorratsbehälter (14) und dessen mittlere Pilotöffnung mit der Pilotkammer (38) in Verbindung stehen, daß wenigstens ein Absperrmittel (88) vorgesehen ist, das in einer ersten Lage die Verbindung zwischen der Eintrittsöffnung und der Pilotöffnung öffnet und die Verbindung zwischen der Pilotöffnung und der Ausflußöffnung verschließt, und in einer zweiten Lage die Verbindung zwischen der Eintrittsöffnung und der Pilotöffnung verschließt und die Verbindung zwischen der Pilotöffnung und der Ausflußöffnung öffnet, und daß das Absperrmittel (88) in Abhängigkeit des Ausgangsdruckes der Haupthydraulikpumpe (12) in seine erste Lage und durch Federmittel (86) in seine zweite Lage gedrängt wird.
